# EUROPÄISCHE PATENTSCHRIFT

(11) **EP 0 624 496 B1**
(45) Veröffentlichungstag und Bekanntmachung des Hinweises auf die Patenterteilung: **08.01.1997**
(21) Anmeldenummer: 94106984.1
(22) Anmeldetag: 04.05.1994
(51) Int. Cl.: B60R 25/00, E05B 49/00

(54) **Elektronisches Anti-Diebstahlsystem für Kraftfahrzeuge**
Electronic Anti-Theft system for motor vehicles
Système d'antivol électronique pour véhicules automobiles

(30) Priorität: 14.05.1993 DE 4316299
(43) Veröffentlichungstag der Anmeldung: 17.11.1994
(73) Patentinhaber: SIEMENS AKTIENGESELLSCHAFT, 80333 München (DE)
(72) Erfinder: Heuwieser, Erwin, Dipl.-Ing., D-85540 Haar (DE); Reiner, Robert, Dipl.-Ing., D-82008 Unterhaching (DE); Wetzel, Klaus, Dipl.-Ing., D-81735 München (DE)

(56) Entgegenhaltungen:
- EP-A- 0 539 696
- WO-A-92/18732
- GB-A- 2 188 463

## Beschreibung

Die Erfindung betrifft ein elektronisches Anti-Diebstahlsystem, insbesondere eine elektronische Wegfahrsperre, für Kraftfahrzeuge mittels drahtloser Übertragung von Signalen von einem Schließelement, beispielsweise dem Zündschlüssel, zu einem dazugehörigen Verriegelungselement, beispielsweise dem Zündschloß.

Als drahtlose Signalübertragungsverfahren sind bereits induktive Signalübertragungsverfahren bekannt und finden beispielsweise in den Moby-M-, Moby-I- und Moby-L-Systemen von Siemens Verwendung.

Die vom Schließelement zum Verriegelungselement gesandten Signale sind dabei energiearm und dadurch durch beispielsweise elektromagnetische Fremdfelder leicht störbar.

Andererseits sind auch Infrarotlichtfernsteuerungen bekannt, die Zwar nicht von elektromagnetischen Störfeldern beeinflußt werden können, jedoch im tragbaren Schließelement eine Batterie benötigen, wodurch dieses einen erhöhten Raumbedarf hat. Außerdem muß die Batterie hin und wieder ausgewechselt werden.

Das Problem vorliegender Erfindung besteht somit darin, ein elektronisches Anti-Diebstahlsystem für Kraftfahrzeuge anzugeben, bei dem eine störungsfreie Übertragung insbesondere vom Schließelement zum Verriegelungselement und umgekehrt möglich ist und bei dem auf einen großvolumigen Energiespeicher verzichtet werden kann.

Das Problem wird gelöst durch ein elektronisches Anti-Diebstahlsystem für Kraftfahrzeuge mit einem einen Infrarotlichtsender und einen Magnetfeldempfänger aufweisenden Schließelement und mit einem einen Infrarotlichtempfänger und einen Magnetfeldsender aufweisenden Verriegelungselement.

Das Infrarotlichtsignal kann dabei wesentlich energieärmer sein als das magnetische Signal, ohne durch elektromagnetische Störfelder beeinflußt werden zu können.

In einer bevorzugten Ausführungsform der Erfindung werden über die induktive Übertragungsstrecke vom Verriegelungselement zum Schließelement nicht nur Daten sondern auch Energie übertragen. Dadurch kann auf eine Batterie, die einen hohen Platzbedarf hat und ausgewechselt werden muß, verzichtet werden. Als Energiespeicher kann beispielsweise ein im Schließelement integrierter Kondensator verwendet werden.

In besonders vorteilhafter Weise können Energie und Daten gleichzeitig vom Verriegelungselement zum Schließelement übertragen werden, indem beispielsweise die Information einem energiereichen Trägersignal aufmoduliert wird.

Das Anti-Diebstahlsystem wird in bevorzugter Weise derart betrieben, daß nach dem mechanischen Verbinden des Schließelements mit dem Verriegelungselement ein energiereiches Wechselsignal vom Verriegelungselement zum Schließelement über die induktive Übertragungsstrecke übertragen wird, wobei die Frequenz des Wechselsignals den Takt für die Logik im Schließelement definieren kann. Außerdem können diesem Wechselsignal bereits Daten niederfrequent aufmoduliert sein. Nach dem Abspeichern der Energie im Schließelement und dem Verarbeiten der erhaltenen Daten wird das Schließelement entsprechende Antwortdaten an das Verriegelungselement über die Infrarotlichtübertragungsstrecke senden, wodurch bei gültigen Daten beispielsweise ein Starten des Kraftfahrzeugmotors möglich wird.

Ein besonderer Vorteil des erfindungsgemäßen elektrischen Anti-Diebstahlsystems ist, daß gleichzeitig Daten vom Verriegelungselement zum Schließelement und umgekehrt übertragen werden können, ohne daß sich die Signale durch Reflexion stören.

Außerdem ist die Erfindung mit einem Infrarotlichtfernsteuersystem und/oder einer Schlüssellochbeleuchtung kombinierbar.

## Patentansprüche

1. Elektronisches Anti-Diebstahlsystem für Kraftfahrzeuge mit einem einen Infrarotlichtsender und einen Magnetfeldempfänger aufweisenden Schließelement und mit einem einen Infrarotlichtempfänger und einen Magnetfeldsender aufweisenden Verriegelungselement.

2. Elektronisches Anti-Diebstahlsystem nach Anspruch 1, bei dem vom Magnetfeldsender zum Magnetfeldempfänger sowohl Daten als auch Energie übertragbar sind.

3. Elektronisches Anti-Diebstahlsystem nach Anspruch 2, bei dem vom Magnetfeldsender zum Magnetfeldempfänger gleichzeitig Daten und Energie übertragbar sind.

## Claims

1. Electronic anti-theft system for motor vehicles, having a closing element which has an infrared light transmitter and a magnetic field receiver and having a locking element which has an infrared light receiver and a magnetic field transmitter.

2. Electronic anti-theft system according to Claim 1, in which both data and energy can be transmitted from the magnetic field transmitter to the magnetic field receiver.

3. Electronic anti-theft system according to Claim 2, in which data and energy can be transmitted simultaneously from the magnetic field transmitter to the magnetic field receiver.

## Revendications

1. Système électronique d'antivol de véhicules automobiles, comportant un élément de fermeture muni d'un émetteur de lumière infrarouge et d'un récepteur de champ magnétique et un élément de verrouillage muni d'un récepteur de lumière infrarouge et d'un émetteur de champ magnétique.

2. Système électronique d'antivol suivant la revendication 1, dans lequel aussi bien des données que de l'énergie peuvent être transmises de l'émetteur de champ magnétique au récepteur de champ magnétique.

3. Système électronique d'antivol suivant la revendication 1, dans lequel en même temps des données et de l'énergie peuvent être transmises de l'émetteur de champ magnétique au récepteur de champ magnétique.
